# EUROPÄISCHE PATENTSCHRIFT

(11) **EP 1 649 556 B1**
(45) Veröffentlichungstag und Bekanntmachung des Hinweises auf die Patenterteilung: **11.03.2009**
(21) Anmeldenummer: 04732931.3
(22) Anmeldetag: 14.05.2004
(51) Int. Cl.: H01R 39/38

(54) **BÜRSTENANORDNUNG FÜR EINE ELEKTRISCHE MASCHINE**
BRUSH ARRANGEMENT FOR AN ELECTRIC MACHINE
ENSEMBLE BALAI POUR UNE MACHINE ELECTRIQUE

(30) Priorität: 16.07.2003 DE 10332302
(43) Veröffentlichungstag der Anmeldung: 26.04.2006
(73) Patentinhaber: ROBERT BOSCH GMBH, 70442 Stuttgart (DE)
(72) Erfinder: RUPP, Bernhard, 75056 Sulzfeld (DE); SCHINDLER, Christian, 77830 Buehlertal (DE); TAREK, Mili, 76139 Karlsruhe (DE)
(74) Vertreter: Ulmer, Bernd
(86) Internationale Anmeldenummer: PCT/DE2004/001007
(87) Internationale Veröffentlichungsnummer: WO 2005/008847

(56) Entgegenhaltungen:
- EP-A- 0 304 528
- DE-A- 1 931 104
- DE-U- 8 705 141
- DE-U- 9 003 322

## Beschreibung

### Stand der Technik

Die Erfindung geht aus von einer Bürstenanordnung für eine elektrische Maschine nach dem Oberbegriff des Patentanspruchs 1. Eine derartige Bürstenanordnung weist mindestens eine Bürste auf und mindestens ein Element zum Anpressen der Bürste gegen ein vorzugsweise rotierendes Kontaktelement. Das Element zum Anpressen ist in der Regel eine Schraubenfeder oder eine Rollfeder. Das Kontaktelement kann ein Kommutator oder ein Schleifring sein. Das Element zum Anpressen soll die Bürste bei Abnützung nachführen und ein Abheben zum Beispiel durch Unrundheiten des Kontaktelements verhindern. Je stärker das Element zum Anpressen ausgelegt ist, desto niedriger ist die Gefahr des Abhebens. Allerdings steigt auch der Verscheiß. Schließlich ermöglicht auch noch das erforderliche Spiel der Bürste in ihrer Führung unerwünschte durch Reibwertschwankungen erzeugt Schwingungen.

Mit den Schriften DE 19 31104 A, EP-A-0 304 528, DE 90 03 322 U und DE 87 05 141 U. sind Elektromotoren mit Kohlebürsten bekannt geworden, bei deen zusätzlich zu einem ersten Anpresselement, das die Bürste in radialer Richtung gegen den Kollektor presst, ein zweites Anpresselement angeordnet ist. Dieses zweite Anpresselement ist dabei als Federelement ausgebildet und drückt die Kohlebürste senkrecht zur radialen Anpressrichtung seitlich gegen die Gehäusewand des Bürstenköchers.

### Vorteile der Erfindung

Die erfindungsgemäße Bürstenanordnung für eine elektrische Maschine mit den Merkmalen des Patentanspruchs 1 hat den Vorteil, dass die Gefahr eines Abheben der Bürste vom Kontaktelement vermindert wird. Dabei kann eine Feder zum Anpressen der Bürste schwächer dimensioniert werden, was sich positiv auf den Verschleiß auswirkt. Auch besteht die Möglichkeit, dass Schwingungen durch das erforderliche Spiel in der Führung reduziert werden. Dadurch ist eine exaktere Bürstenpositionierung möglich, was in einer genaueren Kommutierung und einem verminderten Geräusch resultiert. Hierzu weist die Bürstenanordnung für eine elektrische Maschine mit einer Bürste und mindestens einem Element zum Anpressen der Bürste gegen ein rotierendes Kontaktelement ein zusätzliches Element auf, das einem Abheben der Bürste von dem Kontaktelement entgegenwirkt. Hierbei ist das mindestens eine Element vorzugsweise an einem von der Bürste abgewandten Ende eingespannt und liegt mit dem anderen Ende an der Bürste an. Dabei ist es vorteilhaft, wenn zwischen den Enden des mindestens einen Elements wenigstens ein erster Abschnitt ausgebildet, der entgegen der Anpressrichtung steifer als in der Anpressrichtung wirkt. Dabei ist das mindestens eine Element als eine Federzuge ausgebildet, wobei die Federzunge mit einer Kante an der Bürste anliegt und ein sich daran anschließender Abschnitt in Richtung des Kontaktelements geneigt ist.

Falls Unrundheiten des Kontaktelements eine gewisse Restflexibilität erfordern, so wird zwischen dem wenigstens ersten Abschnitt und dem eingespannten Ende ein zweiter Abschnitt ausgebildet, der zumindest entgegen der Anpressrichtung weicher als der wenigstens erste Abschnitt wirkt und vorzugsweise sowohl in als auch entgegen der Anpressrichtung gleich elastisch wirkt.

Greift das Element zum Anpressen der Bürste schräg zur Anpressrichtung an der Bürste an, so neigt die Bürste in ihrer Führung weniger zu Schwingungen.

Eine kostengünstige Ausführung ist, das mindestens eine Element zum Anpressen einstückig mit dem mindestens einen Element auszubilden.

Hat das Kontaktelement nur eine Drehrichtung, so ist es vorteilhaft, das mindestens eine Element an der von der Drehrichtung des Kontaktelements abgewandten Seite der Bürste anzuordnen. Hat das Kontaktelement zwei verschiedene Drehrichtungen, so ist es vorteilhaft, dass das mindestens eine Element an einer Seite der Bürste anliegt, die mit der Drehrichtung des Kontaktelements in einer Ebene liegt. Das Element kann aber auch an beiden erwähnten Seiten anliegen.

In einer vorteilhaften Weiterbildung ist das mindestens eine Element eine Federzunge und das mindestens eine Anpressmittel eine Rollfeder. Hierbei ist es kostengünstig, ein als Federzunge ausgebildetes Element und eine Rollfeder zum Anpressen der Bürste an das Kontaktelement über einen Bügel miteinander zu verbinden.

Eine Elektrische Maschine mit einer erfindungsgemäßen Bürstenanordnung hat den Vorteil, dass sie länger halten kann, da sich die Bürsten weniger schnell abnutzen.

Weitere Vorteile und vorteilhafte Weiterbildungen ergeben sich aus den Unteransprüchen und der Beschreibung.

### Zeichnung

Ein Ausführungsbeispiel ist in der Zeichnung dargestellt und in der nachfolgenden Beschreibung näher erläutert. Es zeigen:
Figur 1 eine erste Bürstenanordnung in einer elektrischen Maschine in einem Querschnitt,
Figur 2 eine zweite, abgewandelte Bürstenanordnung,
Figur 3 eine dritte, abgewandelte Bürstenanordnung,
Figur 4 eine vierte, abgewandelte Bürstenanordnung,
Figur 5 eine fünfte, abgewandelte Bürstenanordnung in einem Längsschnitt und
Figur 6 eine sechste Bürstenanordnung in einem Längsschnitt.

### Beschreibung des Ausführungsbeispiels

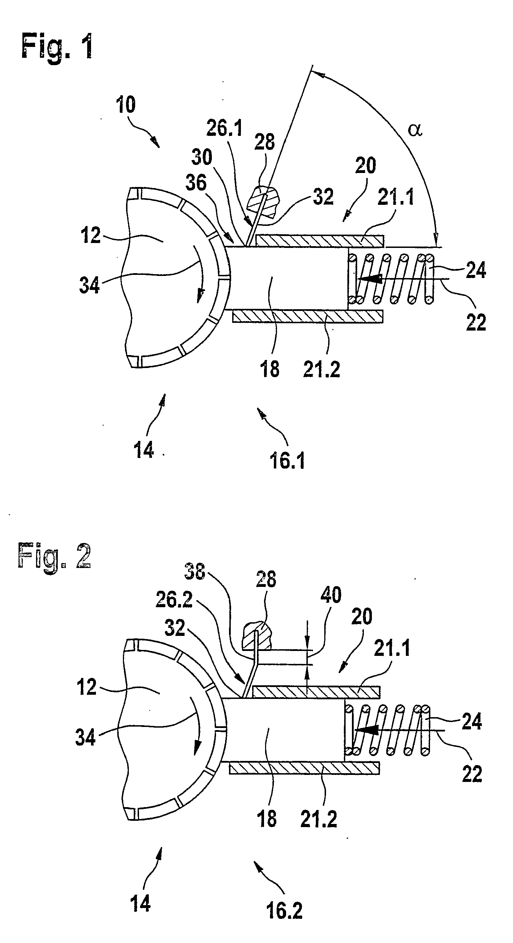

In der Figur 1 ist ein Teil einer elektrischen Maschine 10 vereinfacht in einem Querschnitt gezeigt. Im vorliegenden Ausführungsbeispiel handelt es sich um einen bürstenbehafteten Gleichstrommotor, der beispielsweise in einen Fensterheber, Wischerantrieb etc. eines Kraftfahrzeugs zu Anwendung kommen kann. Es kann sich aber auch um einen Generator handeln.

In der elektrischen Maschine 10 ist auf der Welle 12 für den Fall, dass es sich um einen bürstenbehafteten Gleichstrommotor handelt, ein Kommutator 14 angeordnet. Im Falle eines Generators wäre dies ein Schleifring. In beiden Fällen handelt es sich jedoch um ein Kontaktelement, das rotiert.

Außerdem ist eine Bürstenanordnung 16.1 gezeigt. Die Bürstenanordnung 16.1 weist die erforderliche Anzahl an Bürsten 18 jedoch mindestens eine Bürste 18 beziehungsweise mindestens einen Schleifkontakt auf. Die Bürste 18 ist aus Kohle oder einem sonstigen geeigneten Werkstoff hergestellt; sie ist in einer Führung 20, die zur Welle 12 der elektrischen Maschine 10 ausgerichtet ist und von der zwei Seitenwände 21.1 und 21.2 gezeigt sind, mit Spiel verschiebbar angeordnet. Die Führung ist vorzugsweise Teil eines nicht näher dargestellten Bürstenhalters. Mit einem Pfeil, der zur Welle 12 weist, ist in der Figur 1 die Anpressrichtung 22 gezeigt. Weiterhin umfasst die Bürstenanordnung eine Schraubenfeder 24, die ein Element darstellt, das die Bürste 18 gegen den Kommutator 14 presst. Die Schraubenfeder 24 kann sich an einer vom Kommutator 14 abgewandten stirnseitigen Begrenzung der Führung 20 abstützen.

Zusätzlich zur Schraubenfeder 24 ist eine Federzunge 26.1 vorgesehen, die seitlich an der Bürste 18 anliegt und die einem Abheben der Bürste 18 von dem Kommutator 14 entgegenwirkt. Hierzu ist die Federzunge 26.1 an einem von der Bürste 18 abgewandten Ende 28 eingespannt. Das Ende 28 kann beispielsweise mit dem nicht näher dargestellten Bürstenhalter einstückig im Kunststoff-Spritzgussverfahren hergestellt sein. Die Federzunge 26.1 kann aber auch ein mit Kunststoff umspritztes Metallteil oder einfach eingepresst sein. Mit dem anderen Ende 30 beziehungsweise der dortigen Kante liegt die Federzunge 26.1 an der Bürste 18 an. Der sich an das Ende 30 beziehungsweise die dortige Kante anschließende Abschnitt 32 der Federzunge 26.1 ist in Richtung des Kommutators 14 beziehungsweise der Anpressrichtung 22 geneigt. Das heißt, der Abschnitt 32 wirkt entgegen der Anpressrichtung 22 steifer als in der Anpressrichtung 22. Der Neigungswinkel α zwischen der Anpressrichtung 22 und dem Abschnitt 32 liegt in einem Bereich von 60° bis 80°, wobei 70° sich als besonders günstig erwiesen hat. Hierbei sind jedoch übliche Fertigungstoleranzen von einigen Grad zu berücksichtigen.

Schließlich ist die Federzunge 26.1 in der Figur 1 an der von der mit einem Pfeil bezeichneten Drehrichtung 34 des Kommutators 14 abgewandten Seite 36 der Bürste 18 8 angeordnet. Dadurch wird die Bürste 18 bei der Drehung durch die Bewegung des Kommutators 14 und die Federzunge 26.1 gegen die Seitenwand 21.2 gedrückt. Die Federzunge 26.1 ist bei der Figur 1 so ausgerührt, dass eine Bewegung der Bürste 18 8 entgegen der Anpressrichtung 22 so gut wie nicht möglich ist, da durch die Neigung der Federzunge 26.1 diese nicht entgegen der Anpressrichtung 22 ausweichen kann. Vorzugsweise hemmt bzw. verhindert die Federzunge 26.1 eine Bewegung der Bürste 18 entgegen der Anpressrichtung. Diese Hemmung kann jedoch eine gewisse Restelastizität mit umfassen. Die Federzunge 26.1 kann bei einem Nachführen der sich abnutzenden Bürste 18 durch die Schraubenfeder 24 von der Bürste 18 leicht wegschwenken, obwohl sie dabei noch anliegen kann. Hierbei ist zu beachten, dass die Schraubenfeder 24 so dimensioniert ist, dass die von der Federzunge 26.1 erzeugte Federkraft und die Reibung in der Führung 20 überwunden wird.

In der Figur 2 ist eine abgewandelte Federzunge 26.2 gezeigt. Die sonstigen Bauteile sind gleich und mit denselben Bezugszeichen versehen wie in der Figur 1, weshalb diesbezüglich auch auf die Figur 1 verwiesen wird. Zwischen dem ersten Abschnitt 32 der Federzunge 26.2 und dem eingespannten Ende 28 ist ein zweiter Abschnitt 38 ausgebildet, der sich im wesentlichen senkrecht zur Anpressrichtung 22 erstreckt. Hierzu ist die Federzunge 26 zwischen den beiden Abschnitten 32 und 38 gebogen. Dadurch wirkt der zweite Abschnitt 38 zumindest entgegen der Anpressrichtung 22 weicher als der erste Abschnitt 32 und somit vorzugsweise sowohl in als auch entgegen der Anpressrichtung 22 gleich elastisch. Es ist auch möglich, dass der zweite Abschnitt 38 gegenüber der gezeigten Position geneigt ist. Durch die Länge 40 des zweiten Abschnitts 38 kann ebenfalls die Steifigkeit bzw. das elastische Verhalten der Federzunge 26.2 beeinflusst werden. Durch das elastische Verhalten der Federzunge 26.2 entsteht eine gewisse Restflexibilität, die vorteilhaft ist, wenn der Kommutator 14 sehr unrund ist.

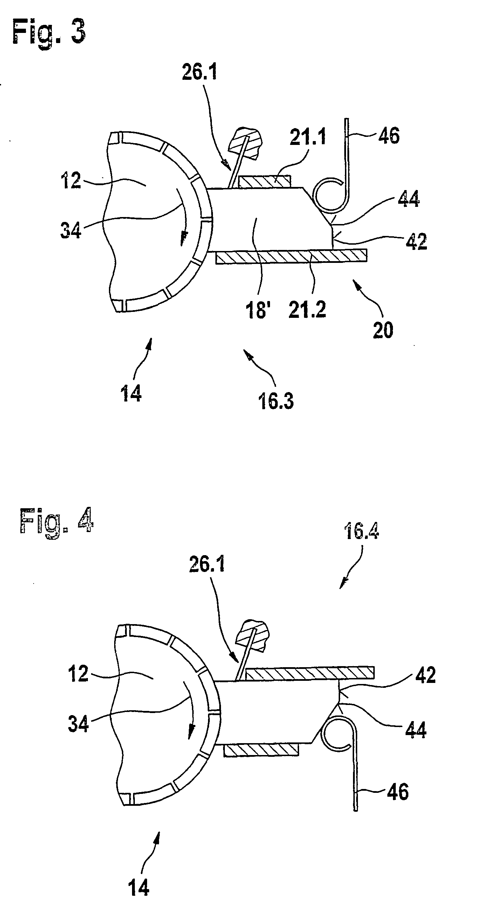

In der Figur 3 ist eine Bürstenanordnung 16.3 gezeigt, die eine abgewandelte Bürste 18` hat. Die sonstigen Bauteile sind gleich und mit denselben Bezugszeichen versehen wie in der Figur 1, weshalb diesbezüglich auch auf die Figur 1 verwiesen wird. Die vom Kommutator 14 abgewandte Stirnseite 42 der Bürste 18` weist eine Schräge 44 auf. An dieser Schräge greift beispielsweise eine Rollfeder 46 an. Dadurch wirkt die Federkraft schräg zur Anpressrichtung 22 bzw. schräg auf die Bürste 18`, wodurch eine weitere Stabilisierung der Bürste 18` in ihrer Führung 20 entsteht. Die Federkraft wirkt in Richtung der Drehrichtung 34 des Kommutators 14.

In der Figur 4 ist eine Bürstenanordnung 16.4 gezeigt. Der einzige Unterschied zu der Anordnung aus Figur 3 ist, dass die Bürste 18' um 180° um ihre Längsachse gedreht ist. Dadurch greift die Federkraft der Rollfeder 46 entgegen der Drehrichtung 34 des Kommutators 14 an, was auch eine Stabilisierung der Bürste 18` in der Führung 20 zur Folge hat.

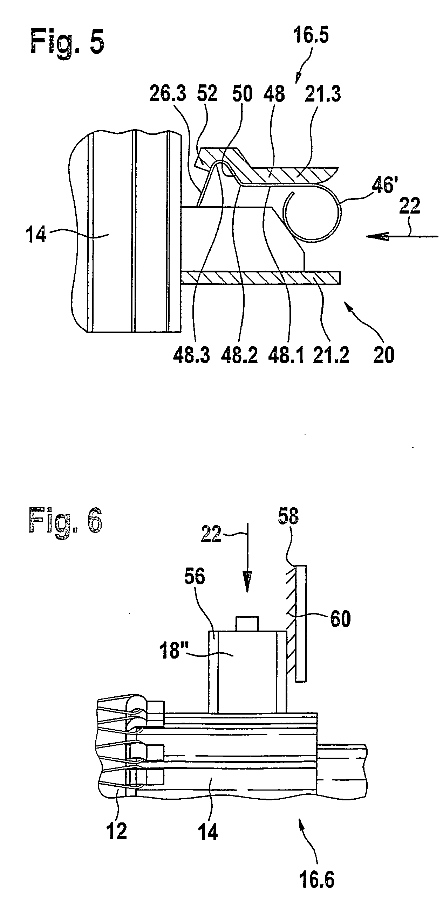

In der Figur 5 ist eine besonders kostengünstige Bürstenanordnung 16.5 gezeigt. Hierbei sind die Federzunge 26.3 und die Rollfeder 46' einstückig ausgebildet. Die Federzunge 26.3 ist über einen Bügel 48 mit der Rollfeder 46' verbunden. Der Bügel 48 weist einen ersten Abschnitt 48.1 auf, der sich an die Rollfeder 46' anschließt und parallel zur Seitenwand 21.3 der Führung 20 verläuft. An den ersten Abschnitt 48.1 schließt sich ein zweiter Abschnitt 48.2 an, der aus der Ebene des ersten Abschnitts 48.1 ragt und in einer seitlichen Ausnehmung 50 der Seitenwand 21 angeordnet ist. An den zweiten Abschnitt 48.2 schließt sich über einen bogenförmigen dritten Abschnitt 48.3 die Federzunge 26.3 an, die zur Bürsten 18` ausgerichtet ist. Somit haben der zweite Abschnitt 48.2 und die Federzunge 26.3 eine V-Form, die in der ebenso V-förmig ausgebildeten Ausnehmung 50 der Seitenwand 21.3 angeordnet ist. Der Abschnitt 52 der Ausnehmung 50, der an dem Kommutator 14 benachbarten Ende der Führung 20 ausgebildet ist, ist weiter von der Bürste 18` entfernt als der restliche Bereich die Seitenwand 21.3. Dadurch ist die Montage der Bürstenanordnung 16.5 vereinfacht. Es ist natürlich auch möglich, die Ausnehmung als einfachen seitlichen Durchbruch etc. auszubilden.

Ein weiterer Aspekt der Bürstenanordnung gemäß Figur 5 ist, dass die Federzunge 26.3 an der Seite 54 der Bürste 18` anliegt, die mit der Drehrichtung des Kommutators 14 in einer Ebene liegt. Dies ist vorteilhaft bei reversierenden elektrischen Maschinen 10. Es ist natürlich auch möglich, die Federzunge 26 so auszubilden oder anzuordnen, dass sie an dieser Seite 54 als auch an der Seite 36 (Figur 1) anliegt.

In der Figur 6 ist eine Bürstenanordnung 16.6 mit einer Bügelfeder 56 und einer als Hammerbürste ausgebildeten Bürste 18'' gezeigt, die nicht Teil der beanspruchten Erfindung ist. Als Elemente, die einem Abheben der Bürste 18" entgegenwirken, sind an einer parallel zur Anpressrichtung 22 der Bügelfeder 56 angeordneten Fläche 58 Borsten 60 angeordnet, die schräg zur Anpressrichtung 22 verlaufen und an der Bügelfeder 56 anliegen. Dadurch kann sich die Bügelfeder 56 in Anpressrichtung 22 bewegen, wird aber an einer Bewegung entgegen der Anpressrichtung 22 gehindert, zumindest wird dies erschwert. Die Borsten 60 wirken somit indirekt über die Bügelfeder 56 einem Abheben der Bürste 18` entgegen. Die Borsten 60 können auch beiderseits der Bügelfeder 56 angeordnet sein; sie können aus Metall oder Kunststoff bestehen. Statt der Borsten 56 kann beispielsweise auch eine Sägezahngeometrie vorgesehen sein oder mehrere Federzungen.

Wichtig bei allen genannten Elementen 26.1, 26.2, 26.3, 60, die einem Abheben der Bürste 18, 18', 18" entgegenwirken ist, dass sie in Anpressrichtung 22 weniger steif als entgegen der Anpressrichtung 22 wirken. Vorzugsweise haben sie entgegen der Anpressrichtung sogar ein steiferes Verhalten als die Federn 24, 46, 46' und 56.

## Patentansprüche

1. Bürstenanordnung (16.1, 16.2, 16.3,16.4, 16.5,16.6) für eine elektrische Maschine (10) mit mindestens einer Bürste (18, 18', 18") und mindestens einem ersten Element (24, 46, 46', 56) zum Anpressen der mindestens einen Bürste (18,18', 18") gegen ein rotierendes Kontaktelement (14), wobei zusätzlich zu dem ersten Element (24, 46, 46', 56) zum Anpressen mindestens ein zweites Element (26.1, 26.2, 26.3, 60) vorgesehen ist, das einem Abheben der mindestens einen Bürste (18, 18', 18") von dem Kontaktelement (14) entgegenwirkt, und das zweite Element (26.1, 26.2, 26.3, 60) eine Federzuge ist, und die Federzunge mit wenigstens einer am Ende der Federzunge angeordneten Kante (30) an der Bürste (18,18', 18") anliegt, und ein sich daran anschließender erster Abschnitt (32) der Federzunge in Richtung des Kontaktelements (14) geneigt ist, **dadurch gekennzeichnet, dass** der Neigungswinkel zwischen der Anpressrichtung (22) und dem Abschnitt (32) einen Winkel im Bereich von 60° bis 80° bildet, so dass das zweite Element (26.1, 26.2, 26.3, 60) eine Bewegung der Bürste (18,18`, 18") entgegen der Anpressrichtung 22 hemmt.

2. Bürstenanordnung (16.1, 16.2, 16.3, 16.4, 16.5, 16.6) nach Anspruch 1, **dadurch gekennzeichnet, dass** das mindestens eine zweite Element (26.1, 26.2, 26.3, 60) in Anpressrichtung (22) weniger steif als entgegen der Anpressrichtung (22) wirkt.

3. Bürstenanordnung (16.1, 16.2,16.3, 16.4, 16.5, 16.6) nach Anspruch 1 oder 2, **dadurch gekennzeichnet, dass** zwischen zwei Enden (28, 30) des mindestens einen zweiten Elements (26.1, 26.2, 26.3, 60) wenigstens ein erster Abschnitt (32) ausgebildet ist, der entgegen der Anpressrichtung (22) steifer als in der Anpressrichtung (22) wirkt.

4. Bürstenanordnung (16.1, 16.2,16.3,16.4, 16.5, 16.6) nach Anspruch 3, **dadurch gekennzeichnet, dass** das mindestens eine zweite Element (26.1, 26.2, 26.3, 60) an einem von der mindestens einen Bürste (18, 18', 18") abgewandten Ende (28) eingespannt ist und mit dem anderen Ende (30) an der mindestens einen Bürste (18,18`, 18") zum Anpressen anliegt.

5. Bürstenanordnung (16.1, 16.2,16.3, 16.4, 16.5, 16.6) nach einem der vorhergehenden Ansprüche, **dadurch gekennzeichnet, dass** das mindestens eine zweite Element (26.1, 26.2, 26.3, 60) die mindestens eine Bürste (18, 18', 18") an eine Seitenwand (21.2) ihrer Führung (20) presst.

6. Bürstenanordnung (16.1, 16.3, 16.4, 16.5, 16.6) nach einem der vorhergehenden Ansprüche, **dadurch gekennzeichnet, dass** das mindestens eine zweite Element (26.1, 26.3, 60) eine Bewegung der mindestens einen Bürste (18, 18', 18") entgegen der Anpressrichtung (22) hemmt.

7. Bürstenanordnung (16.1, 16.2, 16.3, 16.4, 16.5, 16.6) nach einem der Ansprüche 4 bis 5, **dadurch gekennzeichnet, dass** zwischen dem wenigstens ersten Abschnitt (32) und dem eingespannten Ende (28) ein zweiter Abschnitt (38) ausgebildet ist, der zumindest entgegen der Anpressrichtung (22) weicher als der wenigstens erste Abschnitt (32) wirkt.

8. Bürstenanordnung (16.1, 16.2, 16.3, 16.4, 16.5, 16.6) nach einem der vorhergehenden Ansprüche, **dadurch gekennzeichnet, dass** das mindestens eine erste Element (24, 46, 46' 56) zum Anpressen einstückig mit dem mindestens einen zweiten Element (26.1, 26.2, 26.3, 60) ausgebildet ist.

9. Bürstenanordnung (16.1, 16.2, 16.3, 16.4, 16.5, 16.6) nach einem der vorhergehenden Ansprüche, **dadurch gekennzeichnet, dass** das mindestens eine zweite Element (26.1, 26.2) an der von der Drehrichtung (34) des Kontaktelements (14) abgewandten Seite (36) der mindestens einen Bürste (18,18', 18") angeordnet ist und/oder dass das mindestens eine zweite Element (26.3) an einer Seite (54) der mindestens einen Bürste (18, 18', 18") anliegt, die mit der Drehrichtung (34) des Kontaktelements (14) in einer Ebene liegt.

10. Bürstenanordnung (16.1, 16.2,16.3, 16.4, 16.5, 16.6) nach einem der vorhergehenden Ansprüche, **dadurch gekennzeichnet, dass** das erste Element (24, 46, 46', 56) zum Anpressen der mindestens einen Bürste (18, 18', 18") schräg zur Anpressrichtung (22) an der mindestens einen Bürste (18, 18', 18") angreift.

11. Bürstenanordnung (16.1, 16.2,16.3,16.4, 16.5,16.6) nach einem der vorhergehenden Ansprüche, **dadurch gekennzeichnet, dass** das mindestens eine zweite Element (26.1, 26.2, 26.3, 60) eine Federzunge ist und das mindestens eine erste Element zum Anpressen (46, 46') eine Rollfeder und dass die Federzunge und die Rollfeder über einen Bügel (48) miteinander verbunden sind.

12. Elektrische Maschine (10) mit einer Bürstenanordnung (16.1, 16.2, 16.3, 16.4, 16.5, 16.6) nach einem der vorhergehenden Ansprüche.

## Claims

1. Brush arrangement (16.1, 16.2, 16.3, 16.4, 16.5, 16.6) for an electrical machine (10), having at least one brush (18, 18', 18") and at least one first element (24, 46, 46', 56) for pressing the at least one brush (18, 18', 18") against a rotating contact element (14), with at least one second element (26.1, 26.2, 26.3, 60) being provided in addition to the first element (24, 46, 46', 56) for pressing purposes, the said second element preventing the at least one brush (18, 18', 18") lifting off from the contact element (14), and the second element (26.1, 26.2, 26.3, 60) being a spring tongue, and the spring tongue resting on the brush (18, 18', 18") by way of at least one edge (30) which is arranged at the end of the spring tongue, and a first section (32) of the spring tongue, which first section adjoins the said edge, being inclined in the direction of the contact element (14), **characterized in that** the angle of inclination between the pressing direction (22) and the section (32) forms an angle in the range of from 60° to 80°, so that the second element (26.1, 26.2, 26.3, 60) inhibits a movement of the brush (18, 18', 18") counter to the pressing direction (22).

2. Brush arrangement (16.1, 16.2, 16.3, 16.4, 16.5, 16.6) according to Claim 1, **characterized in that** the at least one second element (26.1, 26.2, 26.3, 60) acts less inflexibly in the pressing direction (22) than counter to the pressing direction (22).

3. Brush arrangement (16.1, 16.2, 16.3, 16.4, 16.5, 16.6) according to Claim 1 or 2, **characterized in that** at least one first section (32) is formed between two ends (28, 30) of the at least one second element (26.1, 26.2, 26.3, 60), the said first section acting more inflexibly counter to the pressing direction (22) than in the pressing direction (22).

4. Brush arrangement (16.1, 16.2, 16.3, 16.4, 16.5, 16.6) according to Claim 3, **characterized in that** the at least one second element (26.1, 26.2, 26.3, 60) is clamped at an end (28) which is averted from the at least one brush (18, 18', 18"), and rests on the at least one brush (18, 18', 18") by way of the other end (30) for pressing purposes.

5. Brush arrangement (16.1, 16.2, 16.3, 16.4, 16.5, 16.6) according to one of the preceding claims, **characterized in that** the at least one second element (26.1, 26.2, 26.3, 60) presses the at least one brush (18, 18', 18'') against a side wall (21.2) of its guide (20).

6. Brush arrangement (16.1, 16.2, 16.3, 16.4, 16.5, 16.6) according to one of the preceding claims, **characterized in that** the at least one second element (26.1, 26.3, 60) inhibits a movement of the at least one brush (18, 18', 18") counter to the pressing direction (22).

7. Brush arrangement (16.1, 16.2, 16.3, 16.4, 16.5, 16.6) according to either of Claims 4 and 5, **characterized in that** a second section (38) is formed between the at least one first section (32) and the clamped end (28), the said second section acting more flexibly than the at least one first section (32) at least counter to the pressing direction (22).

8. Brush arrangement (16.1, 16.2, 16.3, 16.4, 16.5, 16.6) according to one of the preceding claims, **characterized in that** the at least one first element (24, 46, 46', 56) for pressing purposes is integrally formed with the at least one second element (26.1, 26.2, 26.3, 60).

9. Brush arrangement (16.1, 16.2, 16.3, 16.4, 16.5, 16.6) according to one of the preceding claims, **characterized in that** the at least one second element (26.1, 26.2) is arranged on that side (36) of the at least one brush (18, 18', 18") which opposes the rotation direction (34) of the contact element (14), and/or **in that** the at least one second element (26.3) rests on a side (54) of the at least one brush (18, 18', 18") which is in a plane with the rotation direction (34) of the contact element (14).

10. Brush arrangement (16.1, 16.2, 16.3, 16.4, 16.5, 16.6) according to one of the preceding claims, **characterized in that** the first element (24, 46, 46', 56) for pressing the at least one brush (18, 18', 18") engages on the at least one brush (18, 18', 18") obliquely to the pressing direction (22).

11. Brush arrangement (16.1, 16.2, 16.3, 16.4, 16.5, 16.6) according to one of the preceding claims, **characterized in that** the at least one second element (26.1, 26.2, 26.3, 60) is a spring tongue, and the at least one first element for pressing purposes (46, 46') is a scroll spring, and **in that** the spring tongue and the scroll spring are connected to one another by means of a clip (48).

12. Electrical machine (10) comprising a brush arrangement (16.1, 16.2, 16.3, 16.4, 16.5, 16.6) according to one of the preceding claims.

## Revendications

1. Dispositif de brosses (16.1, 16.2, 16.3, 16.4, 16.5, 16.6) pour une machine électrique (10) avec au moins une brosse (18, 18', 18") et au moins un premier élément (24, 46, 46', 56) pour assurer une pression de contact de l'au moins une brosse (18, 18', 18") contre un élément de contact rotatif (14), au moins un deuxième élément (26.1, 26.2, 26.3, 60) pour assurer une pression de contact étant prévu en supplément du premier élément (24, 46, 46', 56), celui-ci s'opposant à un relèvement de l'au moins une brosse (18, 18', 18") de l'élément de contact (14) et le deuxième élément (26.1, 26.2, 26.3, 60) étant une lame flexible et la lame flexible s'appuyant par au moins une arête (30) disposée sur l'extrémité de la lame flexible contre la brosse (18, 18',18") et une première section (32) de la lame flexible s'y raccordant étant inclinée en direction de l'élément de contact (14), **caractérisé en ce que** l'angle d'inclinaison entre la direction de pression de contact (22) et la section (32) forme un angle de l'ordre de 60° à 80°, de sorte que le deuxième élément (26.1, 26.2, 26.3, 60) inhibe un déplacement de la brosse (18, 18',18") à l'encontre de la direction de pression de contact (22).

2. Dispositif de brosses (16.1, 16.2. 16.3, 16.4, 16.5, 16.6) selon la revendication 1, **caractérisé en ce que** l'au moins un deuxième élément (26.1, 26.2, 26.3, 60) agit de façon moins rigide en direction de pression de contact (22) qu'à l'encontre de la direction de pression de contact (22).

3. Dispositif de brosses (16.1, 16.2, 16.3, 16.4, 16.5, 16.6) selon la revendication 1 ou 2, **caractérisé en ce qu'**entre deux extrémités (28, 30) de l'au moins un deuxième élément (26.1, 26.2, 26.3, 60) est formée au moins une première section (32) qui agit de façon plus rigide à l'encontre de la direction de pression de contact (22) que dans la direction de pression de contact (22).

4. Dispositif de brosses (16.1, 16.2, 16.3, 16.4, 16.5, 16.6) selon la revendication 3, **caractérisé en ce que** l'au moins un deuxième élément (26.1, 26.2, 26.3, 60) est enserré sur une extrémité (28) opposée à l'au moins une brosse (18, 18',18") et est adjacent par l'autre extrémité (30) à l'au moins une brosse (18, 18',18") pour la pression de contact.

5. Dispositif de brosses (16.1, 16.2, 16.3, 16.4, 16.5, 16.6) selon l'une quelconque des revendications précédentes, **caractérisé en ce que** l'au moins un deuxième élément (26.1, 26.2, 26.3, 60) presse l'au moins une brosse (18, 18', 18") sur une paroi latérale (21.2) de son guidage (20).

6. Dispositif de brosses (16.1, 16.2, 16.3, 16.4, 16.5, 16.6) selon l'une quelconque des revendications précédentes, **caractérisé en ce que** l'au moins un deuxième élément (26.1, 26.3, 60) inhibe un déplacement de l'au moins une brosse (18, 18', 18") à l'encontre de la direction de pression de contact (22).

7. Dispositif de brosses (16.1, 16.2, 16.3, 16.4, 16.5, 16.6) selon l'une quelconque des revendications 4 à 5, **caractérisé en ce qu'**entre l'au moins une première section (32) et l'extrémité enserrée (28) est conçue une deuxième section (38) qui au moins à l'encontre de la pression de contact (22) agit de façon plus souple que l'au moins une première section (32).

8. Dispositif de brosses (16.1, 16.2, 16.3, 16.4, 16.5, 16.6) selon au moins l'une quelconque des revendications précédentes, **caractérisé en ce que** l'au moins un premier élément (24, 46, 46' 56) pour assurer la pression de contact est conçu en monobloc avec l'au moins un deuxième élément (26.1, 26.2, 26.3, 60).

9. Dispositif de brosses (16.1, 16.2, 16.3, 16.4, 16.5. 16.6) selon l'une quelconque des revendications précédentes, **caractérisé en ce que** l'au moins un deuxième élément (26.1, 26.2) est disposé sur le côté (36) de l'au moins une brosse (18, 18', 18") qui est opposé au sens de rotation (34) de l'élément de contact (14) et/ou **en ce que** l'au moins un deuxième élément (26.3) est adjacent à un côté (54) de l'au moins une brosse (18, 18', 18") qui se situe dans un plan avec le sens de rotation (34) de l'élément de contact (14).

10. Dispositif de brosses (16.1, 16.2, 16.3, 16.4, 16.5, 16.6) selon l'une quelconque des revendications précédentes, **caractérisé en ce que** le premier élément (24, 46, 46', 56) assurant la pression de contact de l'au moins une brosse (18, 18',18") s'engage à la diagonale de la direction de pression de contact (22) sur l'au moins une brosse (18, 18', 18").

11. Dispositif de brosses (16.1, 16.2, 16.3, 16.4, 16.5, 16.6) selon l'une quelconque des revendications précédentes, **caractérisé en ce que** l'au moins un deuxième élément (26.1, 26.2, 26.3, 60) est une lame flexible et **en ce que** l'au moins un premier élément assurant la pression de contact (46, 46') est un ressort à col de cygne et **en ce que** la lame flexible et le ressort à col de cygne sont reliés l'un à l'autre par l'intermédiaire d'un étrier (48).

12. Machine électrique (10) avec un dispositif de brosses (16.1, 16.2, 16.3, 16.4, 16.5, 16.6) selon l'une quelconque des revendications précédentes.
